# EUROPEAN PATENT APPLICATION

(11) **EP 4 604 069 A1**
(43) Date of publication of application: **20.08.2025**
(21) Application number: 23884198.5
(22) Date of filing: 20.06.2023
(51) Int. Cl.: G06T 17/00

(54) **FACE SYNTHESIS METHOD AND APPARATUS**

(30) Priority: 31.10.2022 CN 202211343605
(71) Applicant: Huawei Cloud Computing Technologies Co., Ltd., Guiyang, Guizhou 550025 (CN)
(72) Inventor: GAO, Yuan, Guiyang, Guizhou 550025 (CN); YIN, Qing, Guiyang, Guizhou 550025 (CN)
(74) Representative: Goddar, Heinz J.
(86) International application number: PCT/CN2023/101312
(87) International publication number: WO 2024/093259

(57) **Abstract**

This application provides a facial synthesis method and apparatus. In embodiments, first facial information of a first model and second facial information of a second model are obtained, where facial information includes category information of a trait of each facial feature of a face. Third facial information is synthesized based on the first facial information and the second facial information according to a trait inheritance rule, where the third facial information corresponds to a third model, and the trait inheritance rule indicates a synthesis coefficient corresponding to the category information of the trait of the facial feature. Therefore, accuracy of 3D face model synthesis is ensured, and efficiency of 3D face model synthesis is improved.

## Description

This application claims priority to Chinese Patent Application No. 202211343605.1, filed with the China National Intellectual Property Administration on October 31, 2022 and entitled "FACIAL SYNTHESIS METHOD AND APPARATUS", which is incorporated herein by reference in its entirety.

### TECHNICAL FIELD

This application relates to the field of computer technologies, and in particular, to a facial synthesis method and apparatus.

### BACKGROUND

With development of extended reality (Extended Reality, XR) technologies, virtual characters have been applied to various industries, such as finance, healthcare, and education.

Currently, a 3D face model is generated based on a 2D face image. However, the 2D face image does not include spatial information. Consequently, accuracy of the 3D face model generated based on the 2D face image is low, and efficiency of generating the 3D face model through other three-dimensional modeling is low.

### SUMMARY

Embodiments of this application provide a facial synthesis method and apparatus, to improve low efficiency of a 3D face model while ensuring accuracy.

According to a first aspect, an embodiment of this application provides a facial synthesis method. The method includes:
obtaining first facial information of a first model and second facial information of a second model, where facial information includes category information of a trait of each facial feature of a face; and
Synthesizing third facial information based on the first facial information and the second facial information according to a trait inheritance rule, where the third facial information corresponds to a third model, and the trait inheritance rule indicates a synthesis coefficient corresponding to the category information of the trait of the facial feature.

In an example, the first model may be a 3D face model. The second model may be a 3D face model. The first model and the second model may be 3D face models of persons of different genders. Category information of traits of facial features includes a dominant trait and a recessive trait, where the category information of the trait of the facial feature may be considered as a pseudogene of the facial feature. In this way, the 3D face model is a digital model with an inheritance attribute. The trait inheritance rule is an inheritance rule defined based on pseudogenes.

According to this embodiment of this application, 3D face synthesis is performed based on facial features of a pair of 3D face models and a category of a pseudogene of each facial feature according to a face synthesis rule, so that accuracy of 3D face model synthesis is ensured. In addition, a plurality of 3D face models can be synthesized based on the pair of 3D face models, so that efficiency of 3D face model synthesis is improved.

In a possible implementation, the method further includes:
obtaining the trait inheritance rule selected by a user from a plurality of candidate trait inheritance rules.

In this way, the user can select the trait inheritance rule based on a requirement of the user, so that a synthesized face model meets the requirement of the user.

In a possible implementation, the method further includes:
adjusting the trait inheritance rule according to a configuration instruction of the user.

The synthesizing third facial information based on the first facial information and the second facial information according to a trait inheritance rule includes:
synthesizing the third facial information based on the first facial information and the second facial information according to an adjusted trait inheritance rule.

In this way, the user can configure the trait inheritance rule based on a requirement of the user, so that a synthesized face model meets the requirement of the user.

In a possible implementation, the synthesizing third facial information based on the first facial information and the second facial information according to a trait inheritance rule, where the third facial information corresponds to a third model includes:
determining category information of traits of a plurality of first facial features extracted from the first facial information;
determining category information of traits of a plurality of second facial features extracted from the second facial information; and
performing feature synthesis on the plurality of first facial features and the plurality of second facial features based on the category information of the traits of the plurality of first facial features and the category information of the traits of the plurality of second facial features according to the trait inheritance rule, to obtain the third facial information.

In this way, synthesis is performed on facial features with the inheritance attribute according to the trait inheritance rule, so that the efficiency of 3D face model synthesis is improved. In addition, a synthesized 3D face complies with the trait inheritance rule and is explainable.

In a possible implementation, the performing feature synthesis on the plurality of first facial features and the plurality of second facial features based on the category information of the traits of the plurality of first facial features and the category information of the traits of the plurality of second facial features according to the trait inheritance rule, to obtain the third facial information includes:
performing linear synthesis on the plurality of first facial features and the plurality of second facial features based on the category information of the traits of the plurality of first facial features and the category information of the traits of the plurality of second facial features according to the trait inheritance rule; and
performing facial synthesis on a plurality of facial features obtained through the linear synthesis, to obtain the third facial information.

In this way, synthesis is performed on the facial features with the inheritance attribute according to the trait inheritance rule, so that the efficiency of 3D face model synthesis is improved. In addition, the synthesized 3D face complies with the trait inheritance rule and is explainable.

In a possible implementation, the performing facial synthesis on a plurality of facial features obtained through the linear synthesis, to obtain the third facial information includes:
performing, based on a generative adversarial network, facial synthesis on the plurality of facial features obtained through the linear synthesis, to obtain the third facial information.

In this way, facial synthesis is performed based on the generative adversarial network, so that accuracy of face synthesis can be improved.

In a possible implementation, the performing facial synthesis on a plurality of facial features obtained through the linear synthesis, to obtain the third facial information includes:
performing, based on a diffusion model, facial synthesis on the plurality of facial features obtained through the linear synthesis, to obtain the third facial information.

In this way, facial synthesis is performed based on the diffusion model, so that accuracy of face synthesis can be improved.

In a possible implementation, the method further includes:
extracting a plurality of facial features of each model from each of a plurality of models;
performing cluster analysis on a same type of facial feature, to obtain category information of a trait of the facial feature; and
marking each model based on category information of traits of the plurality of facial features in each model, to obtain respective facial information of the plurality of models.

In this way, the category information of the trait is associated with the facial feature, so that the facial feature has an inheritance characteristic, and the synthesized 3D face complies with the trait inheritance rule and is explainable.

According to a second aspect, an embodiment of this application provides a facial synthesis apparatus. The apparatus includes:
an obtaining module, configured to obtain first facial information of a first model and second facial information of a second model, where facial information includes category information of a trait of each facial feature of a face; and
a synthesis module, configured to synthesize third facial information based on the first facial information and the second facial information according to a trait inheritance rule, where the third facial information corresponds to a third model, and the trait inheritance rule indicates a synthesis coefficient corresponding to the category information of the trait of the facial feature.

In an example, the first model may be a 3D face model. The second model may be a 3D face model. The first model and the second model may be 3D face models of persons of different genders. Category information of traits of facial features includes a dominant trait and a recessive trait, where the category information of the trait of the facial feature may be considered as a pseudogene of the facial feature. In this way, the 3D face model is a digital model with an inheritance attribute. The trait inheritance rule is an inheritance rule defined based on pseudogenes.

According to this embodiment of this application, 3D face synthesis is performed based on facial features of a pair of 3D face models and a category of a pseudogene of each facial feature according to a face synthesis rule, so that accuracy of 3D face model synthesis is ensured. In addition, a plurality of 3D face models can be synthesized based on the pair of 3D face models, so that efficiency of 3D face model synthesis is improved.

In a possible implementation, the obtaining module is further configured to obtain the trait inheritance rule selected by a user from a plurality of candidate trait inheritance rules.

In this way, the user can select the trait inheritance rule based on a requirement of the user, so that a synthesized face model meets the requirement of the user.

In a possible implementation, the apparatus further includes:
an adjustment module, configured to adjust the trait inheritance rule according to a configuration instruction of the user.

The synthesis module is configured to synthesize the third facial information based on the first facial information and the second facial information according to an adjusted trait inheritance rule.

In this way, the user can configure the trait inheritance rule based on a requirement of the user, so that a synthesized face model meets the requirement of the user.

In a possible implementation, the synthesis module is configured to:
determine category information of traits of a plurality of first facial features extracted from the first facial information;
determine category information of traits of a plurality of second facial features extracted from the second facial information; and
perform feature synthesis on the plurality of first facial features and the plurality of second facial features based on the category information of the traits of the plurality of first facial features and the category information of the traits of the plurality of second facial features according to the trait inheritance rule, to obtain the third facial information.

In this way, synthesis is performed on facial features with the inheritance attribute according to the trait inheritance rule, so that the efficiency of 3D face model synthesis is improved. In addition, a synthesized 3D face complies with the trait inheritance rule and is explainable.

In a possible implementation, the synthesis module is configured to:
perform linear synthesis on the plurality of first facial features and the plurality of second facial features based on the category information of the traits of the plurality of first facial features and the category information of the traits of the plurality of second facial features according to the trait inheritance rule; and
perform facial synthesis on a plurality of facial features obtained through the linear synthesis, to obtain the third facial information.

In this way, synthesis is performed on the facial features with the inheritance attribute according to the trait inheritance rule, so that the efficiency of 3D face model synthesis is improved. In addition, the synthesized 3D face complies with the trait inheritance rule and is explainable.

In a possible implementation, the synthesis module is configured to perform, based on a generative adversarial network, facial synthesis on the plurality of facial features obtained through the linear synthesis, to obtain the third facial information.

In this way, facial synthesis is performed based on the generative adversarial network, so that accuracy of face synthesis can be improved.

In a possible implementation, the synthesis module is configured to perform, based on a diffusion model, facial synthesis on the plurality of facial features obtained through the linear synthesis, to obtain the third facial information.

In this way, facial synthesis is performed based on the diffusion model, so that accuracy of face synthesis can be improved.

In a possible implementation, the apparatus further includes:
an extraction module, configured to extract a plurality of facial features of each model from each of a plurality of models;
an analysis module, configured to perform cluster analysis on a same type of facial feature, to obtain category information of a trait of the facial feature; and
a marking module, configured to mark each model based on category information of traits of the plurality of facial features in each model, to obtain respective facial information of the plurality of models.

In this way, the category information of the trait is associated with the facial feature, so that the facial feature has an inheritance characteristic, and the synthesized 3D face complies with the trait inheritance rule and is explainable.

According to a third aspect, an embodiment of this application provides a computing device cluster, including at least one computing device. Each computing device includes a processor and a memory.

A processor of the at least one computing device is configured to execute instructions stored in a memory of the at least one computing device, to enable the computing device cluster to perform the method according to any one of the first aspect or the possible implementations of the first aspect.

According to a fourth aspect, an embodiment of this application provides a computer program product including instructions. When the instructions are run by a computing device cluster, the computing device cluster is enabled to perform the method according to any one of the first aspect or the possible implementations of the first aspect.

According to a fifth aspect, an embodiment of this application provides a computer-readable storage medium, including computer program instructions. When the computer program instructions are executed by a computing device cluster, the computing device cluster performs the method according to any one of the first aspect or the possible implementations of the first aspect.

### BRIEF DESCRIPTION OF DRAWINGS

FIG. 1 is a diagram of a system architecture of a 3D face synthesis system according to an embodiment of this application;
FIG. 2 is a schematic flowchart of a 3D face model synthesis method according to an embodiment of this application;
FIG. 3 is a diagram of interface display of a terminal device according to an embodiment of this application;
FIG. 4 is a diagram of interface display of another terminal device according to an embodiment of this application;
FIG. 5 is a diagram of interface display of still another terminal device according to an embodiment of this application;
FIG. 6 is a schematic flowchart of a facial synthesis method according to an embodiment of this application;
FIG. 7 is a diagram of a structure of a facial synthesis apparatus according to an embodiment of this application;
FIG. 8 is a diagram of an architecture of a facial synthesis system according to an embodiment of this application;
FIG. 9 is a diagram of a structure of a computing device according to an embodiment of this application;
FIG. 10 is a diagram of an architecture of a computing device cluster according to an embodiment of this application; and
FIG. 11 is a diagram of an architecture of another computing device cluster according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In descriptions of embodiments of this application, the term "example", "for example", "in an example", or the like is used to represent giving an example, an illustration, or a description. Any embodiment or design scheme described with "example", "for example", or "in an example" in embodiments of this application should not be explained as being more preferred or having more advantages than another embodiment or design scheme. Exactly, use of the term "example", "for example", "in an example", or the like is intended to present a relative concept in a specific manner.

In the descriptions of embodiments of this application, the term "and/or" describes only an association relationship between associated objects and represents that three relationships may exist. For example, A and/or B may represent the following three cases: Only A exists, only B exists, and both A and B exist. In addition, unless otherwise specified, the term "a plurality of" means two or more. For example, "a plurality of systems" means two or more systems, and "a plurality of terminals" means two or more terminals.

In addition, terms "first" and "second" are merely used for the purpose of description, and shall not be understood as indicating or implying relative importance or implicitly indicating indicated technical features. Therefore, a feature limited by "first" or "second" may explicitly or implicitly include one or more such features. Terms "include", "contain", "have", and other variants thereof all mean "include but are not limited to", unless otherwise specifically emphasized in another manner.

With development of extended reality (Extended Reality, XR) technologies, virtual digital characters have been applied to various industries, such as finance, healthcare, and education. In a virtual world, a large quantity of images of virtual digital characters are required, and facial images are especially important. How to quickly generate a high-quality virtual face is a current hot topic of common interest in both academia and industry.

Currently, a solution for generating a 3D face model includes modeling or 2D face image fusion. A 2D face image does not include spatial information. Consequently, accuracy of a 3D face model synthesized in the 2D face image fusion manner is low. The modeling is usually manual modeling using 3D software, or modeling performed by scanning a face through a face capture device. However, efficiency of generating a 3D face model in the modeling manner is low.

Based on this, embodiments of this application provide a facial synthesis method and apparatus, to perform synthesis on two 3D face models with an inheritance attribute according to a trait inheritance rule, to obtain a synthesized 3D face model. In this way, the 3D face model is synthesized based on the 3D face models, so that accuracy of the 3D face model can be ensured; and the 3D face model can be automatically synthesized according to the trait inheritance rule, so that efficiency of 3D face model synthesis is improved.

The following describes in detail a 3D face model synthesis system provided in embodiments of this application.

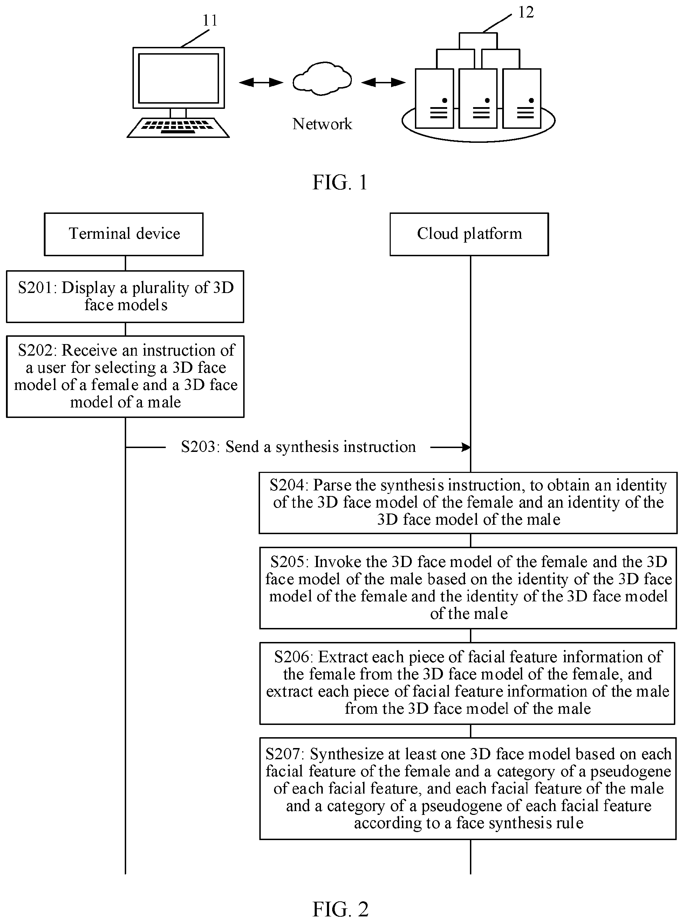

FIG. 1 is a diagram of an architecture of a 3D face model synthesis system according to an embodiment of this application. As shown in FIG. 1, the 3D face model synthesis system provided in this embodiment of this application includes a terminal device 11 and a cloud platform 12. The terminal device 11 and the cloud platform 12 communicate with each other through an internet 13.

The internet 13 between the terminal device 11 and the cloud platform 12 may be implemented by using any known network communication protocol. The network communication protocol may be various wired or wireless communication protocols, such as Ethernet, universal serial bus (universal serial bus, USB), FireWire (FireWire), global system for mobile communications (global system for mobile communications, GSM), general packet radio service (general packet radio service, GPRS), code division multiple access (code division multiple access, CDMA), wideband code division multiple access (wideband code division multiple access, WCDMA), time division code division multiple access (time division code division multiple access, TD-SCDMA), long term evolution (long term evolution, LTE), new radio (New Radio, NR), Bluetooth (Bluetooth), and wireless fidelity (wireless fidelity, Wi-Fi).

The terminal device 11 may have at least functions of performing human-computer interaction with a user, storing received data, sending data to the cloud platform, and sending an instruction to the cloud platform. The terminal device includes a human-computer interaction interface 110, and the user logs in to the cloud platform 12 by using the human-computer interaction interface 110, to synthesize a 3D face model by using computing resources of the cloud platform 12.

In some embodiments, the terminal device 11 may be a mobile phone, a tablet computer, a notebook computer, a desktop computer, a smart television, a smart screen, or the like.

When the cloud platform 12 receives a face synthesis instruction of the user, based on the 3D face model synthesis system, third facial information is synthesized according to a trait inheritance rule provided in this embodiment of this application and based on first facial information and second facial information. The third facial information corresponds to a third model, and the trait inheritance rule indicates a synthesis coefficient corresponding to the category information of the trait of the facial feature. In this way, the 3D face model is synthesized based on 3D face models, so that accuracy of the 3D face model can be ensured; and the 3D face model can be automatically synthesized according to the trait inheritance rule, so that efficiency of 3D face model synthesis is improved.

Based on the 3D face model synthesis system in the embodiment of FIG. 1, the following describes in detail a 3D face model synthesis method provided in embodiments of this application.

FIG. 2 is a schematic flowchart of a 3D face model synthesis method according to an embodiment of this application. The 3D face model synthesis method provided in this embodiment of this application may be applied to the 3D face model synthesis system shown in FIG. 1. As shown in FIG. 2, the 3D face model synthesis method provided in this embodiment of this application includes the following steps S201 to S207.

S201: A terminal device displays a plurality of face images.

The face image is an image corresponding to a face described by using a 3D face model. The 3D face model is a mathematical model used to describe the face. For example, the 3D face model may be a face model formed by point cloud data, or may be a 3D face model (for ease of description, referred to as a mesh-based 3D face model below) processed by using a mesh (mesh).

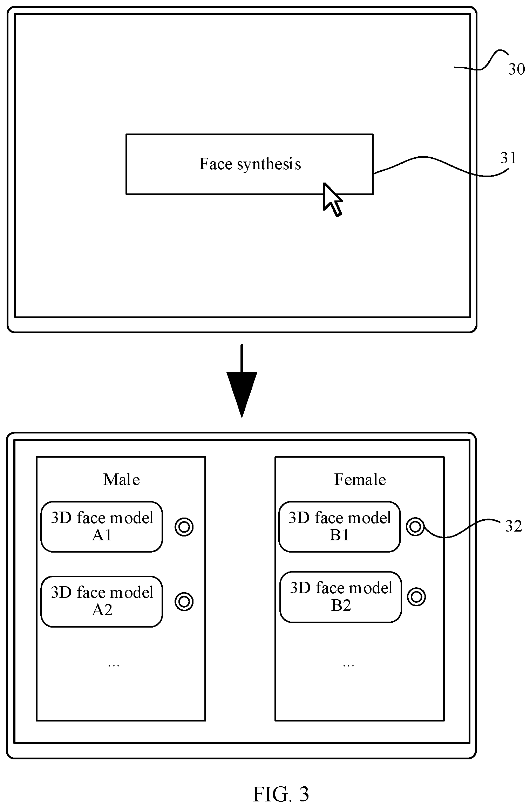

As shown in FIG. 3, the terminal device can display a face synthesis control 31 on a human-computer interaction interface 30. After the terminal device receives an operation of a user on the face synthesis control 31, the terminal device can display the plurality of face images, and the user can select face images required by the user from the face images.

As shown in FIG. 3, the human-computer interaction interface 30 displays face images of males, including a face image A1, a face image A2, and the like. The human-computer interaction interface 30 displays face images of females, including a face image B 1, a face image, and the like. Herein, a display area of each face image further includes a selection control 32, so that the user determines the selected face image by using the selection control 32.

In some embodiments, a 3D face model database may be stored on a cloud platform. The user sends a request instruction to the cloud platform by using the terminal device, and the terminal device can receive face images respectively corresponding to a plurality of 3D face models. For example, after receiving the request instruction sent by the terminal device, the cloud platform randomly sends, to the terminal device, the face images respectively corresponding to the plurality of 3D face models. Alternatively, the user may send, based on a requirement of the user, the request instruction to the cloud platform for a plurality of times by using the terminal device, and the cloud platform sends only face images of a few 3D face models to the terminal device each time. The user may select, by using the terminal device, a face image that meets the requirement of the user from the face images sent by the cloud platform each time, until a quantity of 3D face models selected by the user meets the requirement of the user; and the user stops sending the request instruction to the cloud platform. After receiving the face images that respectively correspond to the plurality of 3D face models and that are sent by the cloud platform, the terminal device can display the plurality of face images.

In this embodiment of this application, the 3D face model library is pre-constructed. In a possible implementation, a developer of the 3D face model library may collect an existing 3D face model, to construct the 3D face model database. In a possible implementation, a face image corresponding to the 3D face model may be obtained through conversion based on the 3D face model. In another possible implementation, the developer collects both a 3D face model and a face image, and stores the 3D face model and the face image in an associated manner.

In some embodiments, the 3D face model includes facial information, and the facial information indicates a plurality of facial features and a category of a pseudogene of each facial feature. The pseudogene is a gene category that is of the facial feature and that is defined by the developer of the 3D face model library according to an existing gene inheritance rule. Categories of pseudogenes include a dominant gene and a recessive gene. Facial features include a nose, eyes, a mouth, eyebrows, eyelashes, ears, and the like.

Herein, after collecting the 3D face model, the developer of the 3D face model library marks a category of a pseudogene of a facial feature in each 3D face model. In addition, each 3D face model further includes a gender of the 3D face model.

In a possible implementation, after collecting the 3D face model, the developer clusters a large quantity of 3D face models, to perform binary classification on the large quantity of 3D face models, to obtain 3D face models of a plurality of males and 3D face models of a plurality of females. Then, facial features in the 3D face models of the plurality of males are clustered, to perform binary classification on the facial features, to determine a category of a pseudogene of each facial feature. For example, a target of the binary classification is to enable a ratio of a quantity of facial features with dominant genes to a quantity of facial features with recessive genes to be 3:1. For example, there are 100 males, where a quantity of males whose noses are with a dominant gene is 75, and a quantity of males whose noses are with a recessive gene is 25. Similarly, a manner of clustering for the females is the same as that for the males, and details are not described herein again.

The face image further carries an identity of the 3D face model, to distinguish between 3D face models. In a possible implementation, the identity may be an identifier including a character. For example, a character A identifies a male, and a character B identifies a female. A number identifies a sequence number of the 3D face model. For example, identities of 3D face models of 30 males are A000001, A000002, ..., and A000030. Identities of 3D face models of 30 females are B000001, B000002, ..., and B000030.

S202: The terminal device receives an instruction of the user for selecting a face image of a female and a face image of a male.

The user can select the face image of the female and the face image of the male from the plurality of face images on the human-computer interaction interface of the terminal device. The terminal device receives the instruction of the user for selecting face images, to determine the face image of the female and the face image of the male that are selected by the user.

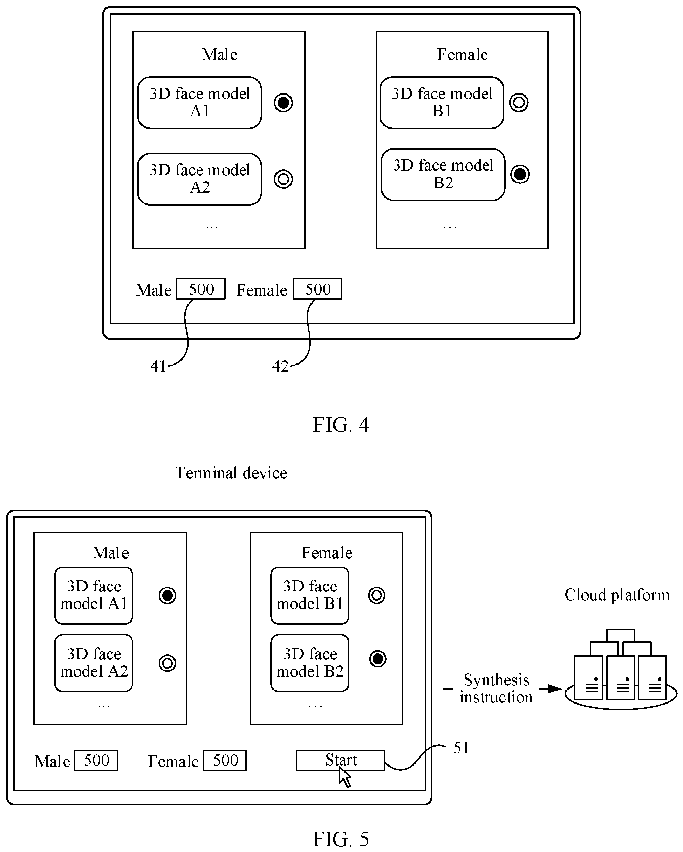

In some embodiments, the user can configure, on the human-computer interaction interface, quantities of 3D face models of different genders after 3D face synthesis. As shown in FIG. 4, the terminal device displays a control 41 and a control 42 on the human-computer interaction interface. The user inputs, by using the control 41, a quantity of 3D face models of males after 3D face synthesis, and the user inputs, by using the control 42, a quantity of 3D faces of females. For example, the user selects a 3D face model A1 and a 3D face model B2, and 1000 3D face models are synthesized, where the 1000 3D face models include 500 3D face models of males and 500 3D face models of females.

S203: The terminal device sends a synthesis instruction to the cloud platform.

After the terminal device determines the face image of the female and the face image of the male that are selected by the user, the terminal device generates the synthesis instruction. The synthesis instruction carries an identity of a 3D face model of the female, an identity of a 3D face model of the male, and quantities of 3D face models of the different genders after 3D face synthesis.

In some embodiments, before S203, the terminal device can display a configuration interface of a face synthesis rule on the human-computer interaction interface, and the user configures the face synthesis rule on the configuration interface. Herein, the face synthesis rule refers to weights of facial features of the different genders in a face synthesis process in a case in which categories of pseudogenes of the facial features are different. The face synthesis rule includes synthesis coefficients. The synthesis coefficients may be weights of facial features in the face synthesis process in a case in which pseudogenes of the facial features are of different categories.

For example, if a pseudogene of a nose is a dominant gene, a weight of a nose of a male in face synthesis is 40%, and a weight of a nose of a female in face synthesis is 60%. If a pseudogene of the nose of the male is a dominant gene, and a pseudogene of the nose of the female is a recessive gene, the weight of the nose of the male in the face synthesis process is 20%, and the weight of the nose of the female in the face synthesis process is 80%. For another example, if a pseudogene of a facial feature of a male is a dominant gene, and a pseudogene of a facial feature of a female is a recessive gene, a weight of the facial feature of the male in the face synthesis process is 40%, and a weight of the facial feature of the female in the face synthesis process is 60%. The face synthesis rule may be configured by the user based on the requirement of the user. The foregoing is merely used as an example for description, and is not considered as a specific limitation.

When the user configures the face synthesis rule by using the terminal device, in S203, the synthesis instruction may further include the face synthesis rule.

In some embodiments, as shown in FIG. 5, the human-computer interaction interface of the terminal device further includes a start control 51. When the user performs an operation on the start control 51, the terminal device sends the synthesis instruction to the cloud platform.

S204: The cloud platform parses the synthesis instruction, to obtain the identity of the 3D face model of the female and the identity of the 3D face of the male.

In some embodiments, when the user configures the face synthesis rule by using the terminal device, the cloud platform can obtain the face synthesis rule by parsing the synthesis instruction.

S205: The cloud platform invokes the 3D face model of the female and the 3D face model of the male based on the identity of the 3D face model of the female and the identity of the 3D face model of the male.

In some embodiments, when the synthesis instruction does not include the face synthesis rule, the cloud platform invokes a face synthesis rule preconfigured in the cloud platform.

S206: The cloud platform extracts each piece of facial feature information of the female from the 3D face model of the female, and extracts each piece of facial feature information of the male from the 3D face model of the male.

Before face synthesis, the cloud platform extracts each piece of facial feature information in the 3D face model of the female, and extracts each piece of facial feature information in the 3D face model of the male. The facial feature information includes a facial feature and a category of a pseudogene of the facial feature.

In a possible implementation, the 3D face model is a mesh-based 3D face model. The mesh-based 3D face model includes coordinate information of a plurality of meshes corresponding to each facial feature in a face. In S206, the cloud platform extracts coordinate information of a plurality of meshes corresponding to each facial feature of the female from the mesh-based 3D face model of a face of the female, and the cloud platform extracts coordinate information of a plurality of meshes corresponding to each facial feature of the male from the mesh-based 3D face model of a face of the male. It should be noted that the mesh-based 3D face model is merely used as a possible implementation of the 3D face model. The 3D face model may alternatively be another 3D face model, for example, a depth image-based model or point cloud data-based model. This is not specifically limited.

S207: The cloud platform synthesizes at least one 3D face model based on each facial feature of the female and a category of a pseudogene of each facial feature, and each facial feature of the male and a category of a pseudogene of each facial feature according to the face synthesis rule.

The cloud platform performs, based on the category of the pseudogene of each facial feature of the female and the category of the pseudogene of each facial feature of the male according to the face synthesis rule, 3D face synthesis on the facial feature of the female and the facial feature of the male, to obtain a plurality of 3D face models.

In some embodiments, the cloud platform performs linear synthesis on same facial features of the male and the female. For example, a nose of the male has a high bridge, the high bridge is a dominant gene, a nose of the female has a low bridge, and the low bridge is a recessive gene. When a synthesized 3D face model is a model of a female, a weight of the nose of the male is 20%, a weight of the nose of the female is 80%, that is, a nose in the synthesized 3D face model=20% of the nose of the male+80% of the nose of the female.

For example, coordinate information of 20% of a plurality of meshes of the nose of the male is randomly extracted, and coordinate information of 80% of meshes of the nose of the female is randomly extracted. Linear synthesis is performed on the coordinate information of 20% of the meshes of the nose of the male and the coordinate information of 80% of the meshes of the nose of the female, to obtain a synthesized nose. A synthesis principle of another facial feature is the same as a synthesis principle of the nose, and details are not described herein.

For example, the face synthesis rule may be shown in Table 1.

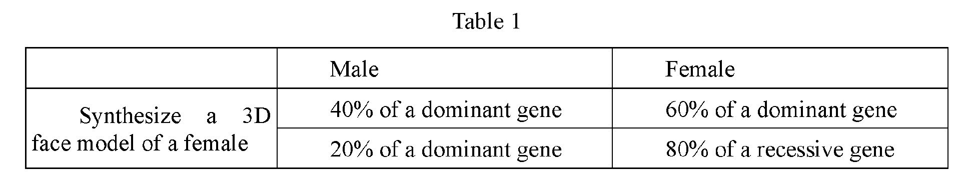

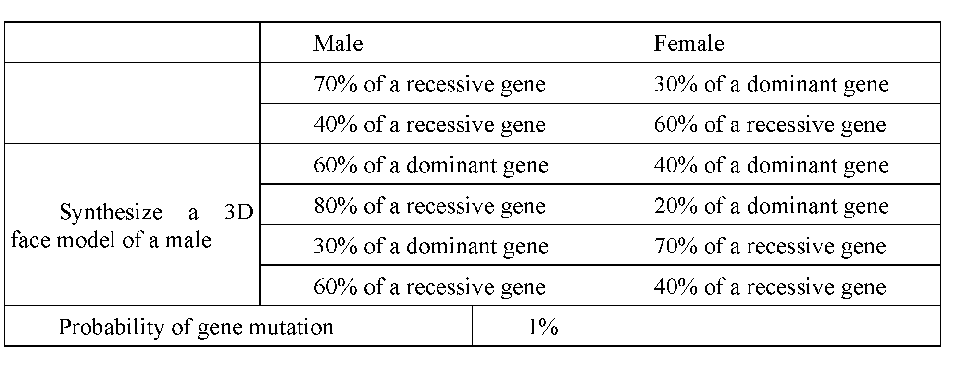

The percentage in Table 1 is a synthesis coefficient.

For another example, further subdivision may be performed for the face synthesis rule based on Table 1, and different facial features correspond to different synthesis coefficients.

The cloud platform fuses synthesized facial features, to obtain a synthesized 3D face model.

In some embodiments, the synthesis instruction further includes a quantity of 3D face models that need to be synthesized for the user, and the cloud platform synthesizes 3D face models based on the quantity. For example, a quantity of 3D face models of males is 500, and a quantity of 3D face models of females is 500. In this case, the cloud platform synthesizes 500 3D face models of males and 500 3D face models of females based on the 3D face model of the female and the 3D face model of the male.

In a possible implementation, the cloud platform may synthesize 3D face models based on different gene mutation probabilities, to obtain a plurality of 3D face models, so that efficiency of 3D face model synthesis is improved.

In another possible implementation, when extracting facial feature data by using the synthesis coefficient, the cloud platform may randomly extract the facial feature data. In this way, facial feature data randomly extracted by the cloud platform for a plurality of times is different, so that a plurality of different 3D face models can be synthesized, and efficiency of 3D face model synthesis can be improved.

In some embodiments, the cloud platform can fuse the synthesized facial features by using a generative adversarial network (Generative Adversarial Network, GAN), so that the synthesized 3D face model is more realistic.

In some other embodiments, the cloud platform can fuse the synthesized facial features by using a diffusion (Diffusion) model, so that accuracy of the synthesized 3D face model is higher.

According to the 3D face model synthesis method provided in this embodiment of this application, the 3D face model can be synthesized based on 3D face models, a pseudogene of each facial feature in the 3D face model is marked according to a biological inheritance rule, and the face synthesis rule is configured. In this way, 3D face synthesis is performed based on a pair of 3D face models according to the face synthesis rule, so that accuracy of 3D face model synthesis is ensured; and the plurality of 3D face models can be synthesized based on the pair of 3D face models, so that the efficiency of 3D face model synthesis is improved.

In addition, because the face synthesis rule is configured based on the biological inheritance rule, the facial feature of the synthesized 3D face model is explainable.

Based on the 3D face model synthesis method provided in the embodiment corresponding to FIG. 2, embodiments of this application provide a facial synthesis method. The following describes in detail the facial synthesis method provided in embodiments of this application.

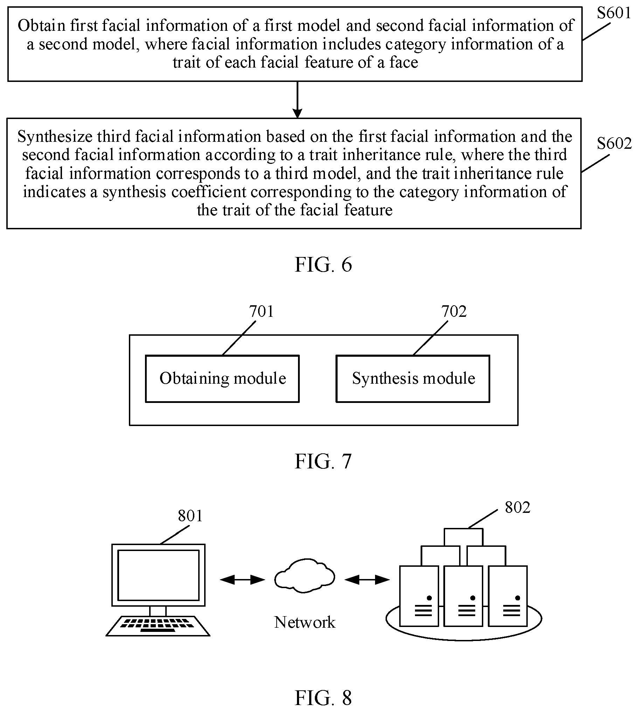

FIG. 6 is a schematic flowchart of a facial synthesis method according to an embodiment of this application. The facial synthesis method provided in this embodiment of this application is performed by the 3D face model synthesis system provided in the embodiment of FIG. 1, or may be performed only by a terminal device. As shown in FIG. 6, the facial synthesis method provided in this embodiment of this application includes S601 and S602.

S601: Obtain first facial information of a first model and second facial information of a second model, where facial information includes category information of a trait of each facial feature of a face.

Both the first model and the second model are 3D face models. In a possible implementation, the first model and the second model are 3D face models of two different genders. For example, the first model is a 3D face model of a female, and the second model is a 3D face model of a male. The first facial information includes a plurality of facial features of a face in the first model and category information of a trait of each facial feature. The second facial information includes a plurality of facial features of a face in the second model and category information of a trait of each facial feature. The category information of the trait includes a category of a pseudogene of each facial feature. The pseudogene is a gene category that is of the facial feature and that is defined by a developer of a 3D face model library according to an existing gene inheritance rule. Categories of pseudogenes include a dominant gene and a recessive gene. Facial features include a nose, eyes, a mouth, eyebrows, eyelashes, ears, and the like. For example, for the eyes, there are two categories: single eyelids and double eyelids, where the double eyelids are with a dominant gene, and the single eyelids are with a recessive gene.

In some embodiments, both the first model and the second model are stored in the 3D face model database. For example, the 3D face model database may be located on the cloud platform in the 3D face model synthesis system shown in FIG. 1. For another example, the 3D face model database may be stored in the terminal device.

The 3D face model database is pre-constructed by the developer. In a possible implementation, the developer of the 3D face model library may collect an existing 3D face model, to construct the 3D face model database. Facial information of a model is marked by the developer. Specifically, each model in the 3D face model library is traversed, so that a plurality of facial features of each model are extracted from each model; cluster analysis is performed on a same type of facial feature, to obtain category information of a trait of the facial feature; and each facial feature is marked based on category information of traits of the plurality of facial features, to obtain respective facial information of a plurality of models. For details, refer to the detailed descriptions of S201 in the embodiment of FIG. 2. Details are not described herein again.

In this embodiment of this application, the first model and the second model may be obtained from the 3D face model database. The first facial information is extracted from the first model, and the second facial information is extracted from the second model.

S602: Synthesize third facial information based on the first facial information and the second facial information according to a trait inheritance rule, where the third facial information corresponds to a third model, and the trait inheritance rule indicates a synthesis coefficient corresponding to the category information of the trait of the facial feature.

The trait inheritance rule indicates weights of different traits in a facial feature synthesis process. For details, refer to the detailed descriptions of the face synthesis rule in S207 in the embodiment of FIG. 2. The trait inheritance rule is an inheritance rule of pseudogenes that is set based on an existing biological inheritance rule.

In some embodiments, the trait inheritance rule may be configured by a user based on a requirement of the user.

In some other embodiments, the developer preconfigures a plurality of trait inheritance rules. In a possible implementation, the user may select the required trait inheritance rule from the plurality of preconfigured trait inheritance rules. In another possible implementation, the user may perform adjustment based on the preconfigured trait rule, for example, adjust weights, to obtain the trait inheritance rule that meets the requirement of the user. The third facial information is synthesized based on the first facial information and the second facial information according to an adjusted trait inheritance rule.

The first facial information includes a plurality of first facial features, and includes category information of a trait of each facial feature. For example, facial information of the female includes a plurality of facial features of the female. The second facial information includes a plurality of second facial features. For example, facial information of the male includes a plurality of facial features of the male, and includes category information of a trait of each facial feature.

The plurality of first facial features are extracted from first facial feature information, and the plurality of second facial features are extracted from second facial feature information. For details, refer to the detailed descriptions of S206 in the embodiment of FIG. 2. Details are not described herein again.

Category information of a trait of each first facial feature is extracted from the first facial feature information, and category information of a trait of each second facial feature is extracted from the second facial feature information.

Feature synthesis is performed on the plurality of first facial features and the plurality of second facial features according to the trait inheritance rule and based on category information of traits of the plurality of first facial features and category information of traits of the plurality of second facial features, to obtain the third facial information.

Specifically, linear synthesis is performed on the plurality of first facial features and the plurality of second facial features based on the category information of the traits of the plurality of first facial features and the category information of the traits of the plurality of second facial features according to the trait inheritance rule. In a linear synthesis process, linear synthesis is performed on a first facial feature and a second facial feature that are of a same type. For details, refer to the detailed descriptions of S207 in the embodiment of FIG. 2. Details are not described herein again.

Facial synthesis is performed on a plurality of facial features obtained through the linear synthesis, to obtain the third facial information. Specifically, the plurality of facial features obtained through the linear synthesis are fused, to obtain the third facial information.

In some embodiments, the plurality of facial features obtained through the linear synthesis are fused by using a generative adversarial network, to obtain the third facial information. In this way, the third model can be obtained, in other words, the third model is a model obtained after performing synthesis on the first model and the second model.

In some embodiments, there are a plurality of pieces of third facial information, so that a plurality of third models are obtained. For details, refer to the detailed descriptions of S207 in the embodiment of FIG. 2. Details are not described herein again.

According to this embodiment of this application, 3D face synthesis is performed based on facial features of a pair of 3D face models and a category of a pseudogene of each facial feature according to the face synthesis rule, so that accuracy of 3D face model synthesis is ensured. In addition, a plurality of 3D face models can be synthesized based on the pair of 3D face models, so that efficiency of 3D face model synthesis is improved.

FIG. 7 is a diagram of a structure of a facial synthesis apparatus according to an embodiment of this application. As shown in FIG. 7, the facial synthesis apparatus provided in this embodiment of this application includes an obtaining module 701 and a synthesis module 702.

The obtaining module 701 is configured to obtain first facial information of a first model and second facial information of a second model, where facial information includes category information of a trait of each facial feature of a face.

The synthesis module 702 is configured to synthesize third facial information based on the first facial information and the second facial information according to a trait inheritance rule, where the third facial information corresponds to a third model, and the trait inheritance rule indicates a synthesis coefficient corresponding to the category information of the trait of the facial feature.

In an example, the first model may be a 3D face model. The second model may be a 3D face model. The first model and the second model may be 3D face models of persons of different genders. Category information of traits of facial features includes a dominant trait and a recessive trait, where the category information of the trait of the facial feature may be considered as a pseudogene of the facial feature. In this way, the 3D face model is a digital model with an inheritance attribute. The trait inheritance rule is an inheritance rule defined based on pseudogenes.

According to this embodiment of this application, 3D face synthesis is performed based on facial features of a pair of 3D face models and a category of a pseudogene of each facial feature according to a face synthesis rule, so that accuracy of 3D face model synthesis is ensured. In addition, a plurality of 3D face models can be synthesized based on the pair of 3D face models, so that efficiency of 3D face model synthesis is improved.

In a possible implementation, the obtaining apparatus is further configured to obtain the trait inheritance rule selected by a user from a plurality of candidate trait inheritance rules.

In this way, the user can select the trait inheritance rule based on a requirement of the user, so that a synthesized face model meets the requirement of the user.

In a possible implementation, the apparatus further includes:
an adjustment module, configured to adjust the trait inheritance rule according to a configuration instruction of the user.

The synthesis module is configured to synthesize the third facial information based on the first facial information and the second facial information according to an adjusted trait inheritance rule.

In this way, the user can configure the trait inheritance rule based on a requirement of the user, so that a synthesized face model meets the requirement of the user.

In a possible implementation, the synthesis module is configured to:
determine category information of traits of a plurality of first facial features extracted from the first facial information;
determine category information of traits of a plurality of second facial features extracted from the second facial information; and
perform feature synthesis on the plurality of first facial features and the plurality of second facial features based on the category information of the traits of the plurality of first facial features and the category information of the traits of the plurality of second facial features according to the trait inheritance rule, to obtain the third facial information.

In this way, synthesis is performed on facial features with the inheritance attribute according to the trait inheritance rule, so that the efficiency of 3D face model synthesis is improved. In addition, a synthesized 3D face complies with the trait inheritance rule and is explainable.

In a possible implementation, the synthesis module is configured to:
perform linear synthesis on the plurality of first facial features and the plurality of second facial features based on the category information of the traits of the plurality of first facial features and the category information of the traits of the plurality of second facial features according to the trait inheritance rule; and
perform facial synthesis on a plurality of facial features obtained through the linear synthesis, to obtain the third facial information.

In this way, synthesis is performed on the facial features with the inheritance attribute according to the trait inheritance rule, so that the efficiency of 3D face model synthesis is improved. In addition, the synthesized 3D face complies with the trait inheritance rule and is explainable.

In a possible implementation, the synthesis module is configured to perform, based on a generative adversarial network, facial synthesis on the plurality of facial features obtained through the linear synthesis, to obtain the third facial information.

In this way, facial synthesis is performed based on the generative adversarial network, so that accuracy of face synthesis can be improved.

In a possible implementation, the synthesis module is configured to perform, based on a diffusion model, facial synthesis on the plurality of facial features obtained through the linear synthesis, to obtain the third facial information.

In this way, facial synthesis is performed based on the diffusion model, so that accuracy of face synthesis can be improved.

In a possible implementation, the apparatus further includes:
an extraction module, configured to extract a plurality of facial features of each model from each of a plurality of models;
an analysis module, configured to perform cluster analysis on a same type of facial feature, to obtain category information of a trait of the facial feature; and
a marking module, configured to mark each model based on category information of traits of the plurality of facial features in each model, to obtain respective facial information of the plurality of models.

In this way, the category information of the trait is associated with the facial feature, so that the facial feature has an inheritance characteristic, and the synthesized 3D face complies with the trait inheritance rule and is explainable.

In this embodiment of this application, both the obtaining module and the synthesis module may be implemented by using software, or may be implemented by using hardware. For example, the following uses the obtaining module as an example to describe an implementation of the obtaining module. Similarly, for an implementation of the synthesis module, refer to the implementation of the obtaining module.

A module is used as an example of a software functional unit, and the obtaining module may include code run on a compute instance. The compute instance may include at least one of a physical host (computing device), a virtual machine, and a container. Further, there may be one or more compute instances. For example, the obtaining module may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. For communication between two VPCs in a same region and cross-region communication between VPCs in different regions, a communication gateway needs to be disposed in each VPC, and interconnection between the VPCs is implemented through communication gateways.

A module is used as an example of a hardware functional unit, and the obtaining module may include at least one computing device, for example, a server. Alternatively, the obtaining module may be a device implemented by an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), a generic array logic (generic array logic, GAL), or any combination thereof.

A plurality of computing devices included in the obtaining module may be distributed in a same region or different regions. The plurality of computing devices included in the obtaining module may be distributed in a same AZ or different AZs. Similarly, the plurality of computing devices included in the obtaining module may be distributed in a same VPC or a plurality of VPCs. The plurality of computing devices may be any combination of computing devices such as the server, the ASIC, the PLD, the CPLD, the FPGA, and the GAL.

It should be noted that, in another embodiment, the obtaining module may be configured to perform any step in the facial synthesis method, and the synthesis module may be configured to perform any step in the facial synthesis method. Steps implemented by the obtaining module and the synthesis module may be specified based on a requirement, and the obtaining module and the synthesis module separately implement different steps in the facial synthesis method to implement all functions of the terminal device apparatus.

This application further provides a facial synthesis system. As shown in FIG. 8, the system includes:
a terminal device 801, configured to obtain first facial information of a first model and second facial information of a second model, where facial information includes category information of a trait of each facial feature of a face; and
a cloud platform 802, configured to synthesize third facial information based on the first facial information and the second facial information according to a trait inheritance rule, where the third facial information corresponds to a third model, and the trait inheritance rule indicates a synthesis coefficient corresponding to the category information of the trait of the facial feature.

In this way, 3D face synthesis is performed based on facial features of a pair of 3D face models and a category of a pseudogene of each facial feature according to a face synthesis rule, so that accuracy of 3D face model synthesis is ensured. In addition, a plurality of 3D face models can be synthesized based on the pair of 3D face models, so that efficiency of 3D face model synthesis is improved.

Both the terminal device and the cloud platform may be implemented by using software, or may be implemented by using hardware. For example, the following describes an implementation of the terminal device. Similarly, for an implementation of the cloud platform, refer to the implementation of the terminal device.

A module is used as an example of a software functional unit, and the terminal device may include code run on a compute instance. The compute instance may be at least one of computing devices such as a physical host (computing device), a virtual machine, and a container. Further, there may be one or more computing devices. For example, the terminal device may include code run on a plurality of hosts/virtual machines/containers. It should be noted that the plurality of hosts/virtual machines/containers configured to run the code may be distributed in a same region, or may be distributed in different regions. The plurality of hosts/virtual machines/containers configured to run the code may be distributed in a same AZ, or may be distributed in different AZs. Each AZ includes one data center or a plurality of data centers with similar geographical locations. Usually, one region may include a plurality of AZs.

Similarly, the plurality of hosts/virtual machines/containers configured to run the code may be distributed in a same VPC, or may be distributed in a plurality of VPCs. Usually, one VPC is set in one region. For communication between two VPCs in a same region and cross-region communication between VPCs in different regions, a communication gateway needs to be disposed in each VPC, and interconnection between the VPCs is implemented through communication gateways.

A module is used as an example of a hardware functional unit, and the terminal device may include at least one computing device, for example, a server. Alternatively, the terminal device may be a device implemented by an ASIC, a PLD, or the like. The PLD may be implemented by a CPLD, an FPGA, a GAL, or any combination thereof.

A plurality of computing devices included in the terminal device may be distributed in a same region or different regions. The plurality of computing devices included in the terminal device may be distributed in a same AZ or different AZs. Similarly, the plurality of computing devices included in the terminal device may be distributed in a same VPC or a plurality of VPCs. The plurality of computing devices may be any combination of computing devices such as the server, the ASIC, the PLD, the CPLD, the FPGA, and the GAL.

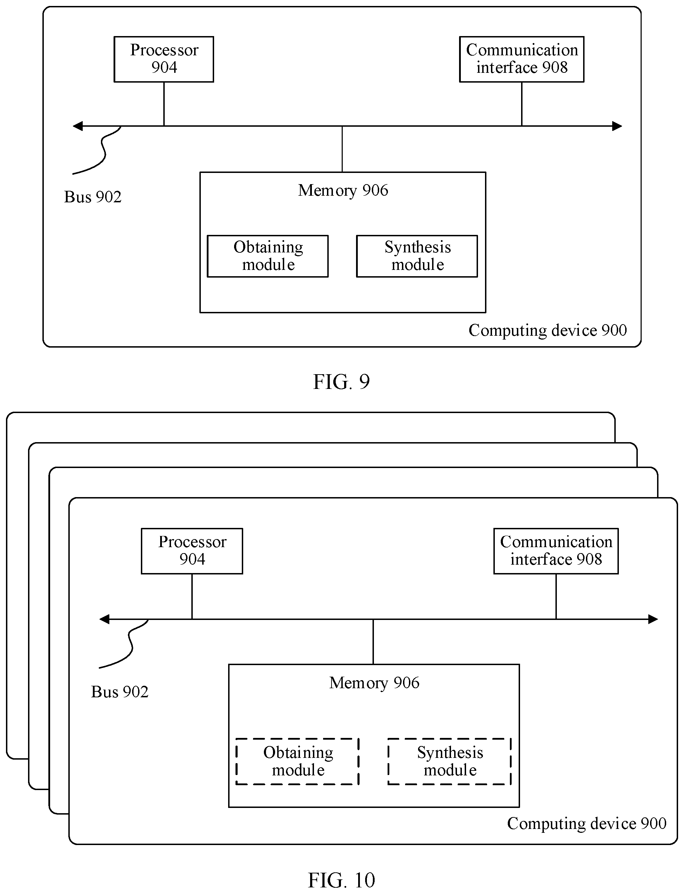

This application further provides a computing device 900. As shown in FIG. 9, the computing device 900 includes a bus 902, a processor 904, a memory 906, and a communication interface 908. The processor 904, the memory 906, and the communication interface 908 communicate with each other through the bus 902. The computing device 900 may be a server or a terminal device. It should be understood that a quantity of processors and a quantity of memories in the computing device 900 are not limited in this application.

The bus 902 may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, the bus is represented by using only one line in FIG. 9. However, it does not mean that there is only one bus or only one type of bus. The bus 902 may include a path for transferring information between components (for example, the memory 906, the processor 904, and the communication interface 908) of the computing device 900.

The processor 904 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 906 may include a volatile memory (volatile memory), for example, a random access memory (random access memory, RAM). The processor 904 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 906 stores executable program code, and the processor 904 executes the executable program code to separately implement functions of the obtaining module and the synthesis module, to implement the facial synthesis method. In other words, the memory 906 stores instructions used to perform the facial synthesis method.

Alternatively, the memory 906 stores executable code, and the processor 904 executes the executable code to separately implement functions of the terminal device and the cloud platform, to implement the facial synthesis method. In other words, the memory 906 stores instructions used to perform the facial synthesis method.

The communication interface 908 uses a transceiver module, for example, but not limited to, a network interface card or a transceiver, to implement communication between the computing device 900 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 10, the computing device cluster includes at least one computing device 900. A memory 906 in one or more computing devices 900 in the computing device cluster may store same instructions used to perform the facial synthesis method.

In some possible implementations, the memory 906 in the one or more computing devices 900 in the computing device cluster each may alternatively store a part of the instructions used to perform the facial synthesis method. In other words, a combination of the one or more computing devices 900 may jointly execute the instructions used to perform the facial synthesis method.

It should be noted that memories 906 in different computing devices 900 in the computing device cluster may store different instructions separately used to perform parts of functions of the terminal device. In other words, the instructions stored in the memories 906 in the different computing devices 900 may implement functions of one or more of the obtaining module and the synthesis module.

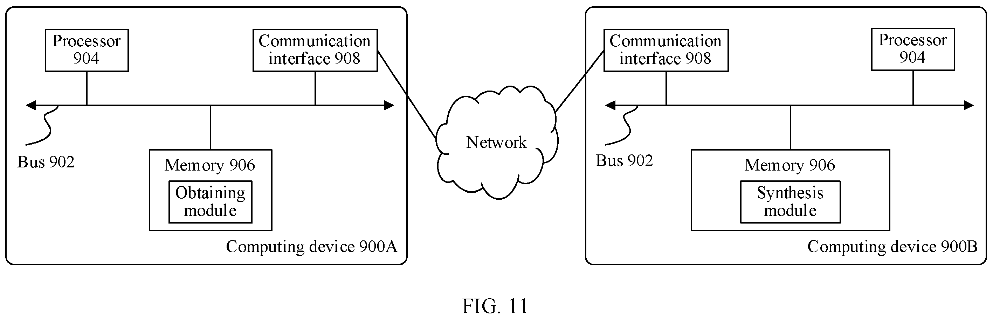

In some possible implementations, the one or more computing devices in the computing device cluster may be connected through a network. The network may be a wide area network, a local area network, or the like. FIG. 11 shows a possible implementation. As shown in FIG. 11, two computing devices 900A and 900B are connected through a network. Specifically, each computing device is connected to the network through a communication interface in the computing device. In this possible implementation, a memory 906 of the computing device 900A stores an instruction for performing a function of the obtaining module. In addition, a memory 906 in the computing device 900B stores instructions for performing functions of a module B and a module C.

A connection manner between computing device clusters shown in FIG. 11 may be as follows: In consideration of that a 3D face model database needs to be constructed in the facial synthesis method provided in this application, it is considered that a function implemented by the synthesis module is performed by the computing device 900B.

It should be understood that functions of the computing device 900A shown in FIG. 11 may alternatively be completed by a plurality of computing devices 900. Similarly, functions of the computing device 900B may alternatively be completed by a plurality of computing devices 900.

An embodiment of this application further provides another computing device cluster. For a connection relationship between computing devices in the computing device cluster, refer to the connection manner in the computing device cluster in FIG. 10 and FIG. 11 similarly. A difference lies in that a memory 906 in one or more computing devices 900 in the computing device cluster may store same instructions used to perform the facial synthesis method.

In some possible implementations, the memory 906 in the one or more computing devices 900 in the computing device cluster each may alternatively store a part of the instructions used to perform the facial synthesis method. In other words, a combination of the one or more computing devices 900 may jointly execute the instructions used to perform the facial synthesis method.

It should be noted that memories 906 in different computing devices 900 in the computing device cluster may store different instructions used to perform parts of functions of the facial synthesis system. In other words, the instructions stored in the memories 906 in the different computing devices 900 may implement functions of one or more of the terminal device and the cloud platform.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the facial synthesis method or the facial synthesis method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions instruct the computing device to perform the facial synthesis method, or instruct the computing device to perform the facial synthesis method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A facial synthesis method, comprising:
Obtaining first facial information of a first model and second facial information of a second model, wherein facial information comprises category information of a trait of each facial feature of a face; and
Synthesizing third facial information based on the first facial information and the second facial information according to a trait inheritance rule, wherein the third facial information corresponds to a third model, and the trait inheritance rule indicates a synthesis coefficient corresponding to the category information of the trait of the facial feature.

2. The method according to claim 1, wherein the method further comprises:
obtaining the trait inheritance rule selected by a user from a plurality of candidate trait inheritance rules.

3. The method according to claim 1 or 2, wherein the method further comprises:
adjusting the trait inheritance rule according to a configuration instruction of the user; and
the synthesizing third facial information based on the first facial information and the second facial information according to a trait inheritance rule comprises:
synthesizing the third facial information based on the first facial information and the second facial information according to the adjusted trait inheritance rule.

4. The method according to any one of claims 1 to 3, wherein the synthesizing third facial information based on the first facial information and the second facial information according to a trait inheritance rule, wherein the third facial information corresponds to a third model comprises:
determining category information of traits of a plurality of first facial features extracted from the first facial information;
determining category information of traits of a plurality of second facial features extracted from the second facial information; and
performing feature synthesis on the plurality of first facial features and the plurality of second facial features based on the category information of the traits of the plurality of first facial features and the category information of the traits of the plurality of second facial features according to the trait inheritance rule, to obtain the third facial information.

5. The method according to claim 4, wherein the performing feature synthesis on the plurality of first facial features and the plurality of second facial features based on the category information of the traits of the plurality of first facial features and the category information of the traits of the plurality of second facial features according to the trait inheritance rule, to obtain the third facial information comprises:
performing linear synthesis on the plurality of first facial features and the plurality of second facial features based on the category information of the traits of the plurality of first facial features and the category information of the traits of the plurality of second facial features according to the trait inheritance rule; and
performing facial synthesis on a plurality of facial features obtained through the linear synthesis, to obtain the third facial information.

6. The method according to any one of claims 1 to 3, wherein the method further comprises:
extracting a plurality of facial features of each model from each of a plurality of models;
performing cluster analysis on a same type of facial feature, to obtain category information of a trait of the facial feature; and
marking each model based on category information of traits of the plurality of facial features in each model, to obtain respective facial information of the plurality of models.

7. A facial synthesis apparatus, comprising:
an obtaining module, configured to obtain first facial information of a first model and second facial information of a second model, wherein facial information comprises category information of a trait of each facial feature of a face; and
a synthesis module, configured to synthesize third facial information based on the first facial information and the second facial information according to a trait inheritance rule, wherein the third facial information corresponds to a third model, and the trait inheritance rule indicates a synthesis coefficient corresponding to the category information of the trait of the facial feature.

8. The apparatus according to claim 7, wherein the obtaining module is further configured to obtain the trait inheritance rule selected by a user from a plurality of candidate trait inheritance rules.

9. The apparatus according to claim 7 or 8, wherein the apparatus further comprises:
an adjustment module, configured to adjust the trait inheritance rule according to a configuration instruction of the user, wherein
the synthesis module is configured to synthesize the third facial information based on the first facial information and the second facial information according to the adjusted trait inheritance rule.

10. The apparatus according·to claim 8 or 9, wherein the synthesis module is configured to:
determine category information of traits of a plurality of first facial features extracted from the first facial information;
determine category information of traits of a plurality of second facial features extracted from the second facial information; and
perform feature synthesis on the plurality of first facial features and the plurality of second facial features based on the category information of the traits of the plurality of first facial features and the category information of the traits of the plurality of second facial features according to the trait inheritance rule, to obtain the third facial information.

11. The apparatus according to claim 10, wherein performing feature synthesis on the plurality of first facial features and the plurality of second facial features based on the category information of the traits of the plurality of first facial features and the category information of the traits of the plurality of second facial features according to the trait inheritance rule, to obtain the third facial information comprises:
performing linear synthesis on the plurality of first facial features and the plurality of second facial features based on the category information of the traits of the plurality of first facial features and the category information of the traits of the plurality of second facial features according to the trait inheritance rule; and
performing facial synthesis on a plurality of facial features obtained through the linear synthesis, to obtain the third facial information.

12. The apparatus according to claim 8 or 9, wherein the apparatus further comprises:
an extraction module, configured to extract a plurality of facial features of each model from each of a plurality of models;
a clustering module, configured to perform cluster analysis on a same type of facial feature, to obtain category information of a trait of the facial feature; and
a marking module, configured to mark each model based on category information of traits of the plurality of facial features in each model, to obtain respective facial information of the plurality of models.

13. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 6.

14. A computer program product comprising instructions, wherein when the instructions are run by a computing device cluster, the computing device cluster is enabled to perform the method according to any one of claims 1 to 6.

15. A computer-readable storage medium, comprising computer program instructions, wherein when the computer program instructions are executed by a computing device cluster, the computing device cluster performs the method according to any one of claims 1 to 6.
